Europäisches Patentamt

European Patent Office

Office européen des brevets

(11) EP 0 878 624 A1

(19) ●

(12) **EUROPÄISCHE PATENTANMELDUNG**

(43) Veröffentlichungstag:
**18.11.1998 Patentblatt 1998/47**

(51) Int. Cl.⁶: **F03B 11/04**, F03B 15/06,
F03B 15/16

(21) Anmeldenummer: **98108023.7**

(22) Anmeldetag: **02.05.1998**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **12.05.1997 DE 19719406**

(71) Anmelder:
**Voith Hydro GmbH & Co. KG
89522 Heidenheim (DE)**

(72) Erfinder:
• **Kopf, Eberhard, Dr.
89522 Heidenheim (DE)**

• **Fermé, Jean-Marc
89522 Heidenheim (DE)**
• **Klein, Joachim
89518 Heidenheim (DE)**

(74) Vertreter: **Dr. Weitzel & Partner
Friedenstrasse 10
89522 Heidenheim (DE)**

Bemerkungen:
Ein Antrag gemäss Regel 88 EPÜ auf Berichtigung
des Anspruchs 3 liegt vor. Über diesen Antrag wird
im Laufe des Verfahrens vor der Prüfungsabteilung
eine Entscheidung getroffen werden (Richtlinien für
die Prüfung im EPA, A-V, 3.).

(54) **Verfahren zum Betreiben einer hydraulischen Maschine zur Vermeidung von Kavitation**

(57)     Die Erfindung betrifft ein Verfahren zum Betreiben einer hydraulischen Maschine, insbesondere einer Wasserturbine, mit den folgenden Verfahrensschritten:

während des Betriebes werden Daten wenigstens der folgenden Zustandskennwerte ermittelt:

Leitschaufelöffnung
Oberwasserpegel
Unterwasserpegel
Kavitationskennwert 1 (relatives Maß für die Intensität der Kavitationsbelastung)
Kaviationskennwert 2 (Maß für den sprunghaften Anstieg von Kavitationserscheinungen)
Luftdruck;

aus der Lage des Betriebspunktes im QH-Diagramm für einen bestimmten NPSH-Wert wird die Art der Kavitation festgestellt;
der Betriebspunkt wird so verändert, daß die Grenze zu der entsprechenden Kavitationsart nicht überschritten wird.

Fig.1

**Beschreibung**

Die Erfindung betrifft ein Verfahren zum Betreiben einer hydraulischen Maschine, insbesondere einer Wasserturbine.

Die Kavitationsgrenzen einer hydraulischen Maschine werden heute üblicherweise im Modellversuch mit Hilfe einer Modellmaschine festgelegt, die sehr viel kleiner als die Großausführung, aber dennoch homolog (d.h. hydraulisch "ähnlich") ist. Über die sogenannten Ähnlichkeitsgesetze kann dabei mit recht guter Zuverlässigkeit auf das Verhalten der Großausführung geschlossen werden. Durch den Saugrohrkonus aus Plexiglas und mit Hilfe eines Boroskops über den Turbinendeckel ist bei der Modellmaschine eine visuelle Beurteilung des Kavitationsverhaltens möglich.

Gemäß dem Stand der Technik werden die im Modellversuch ermittelten Kavitationsgrenzen umgerechnet auf die Großausführung im Turbinenregler abgelegt. In modernen Digitalreglern geschieht dies in Form von Kennlinien, wobei der maximal mögliche Durchfluß als Funktion der Fallhöhe hinterlegt wird. Zweckmäßigerweise wird meist anstatt des Durchflusses die maximale Öffnung des Stellorgans (größter Anstellwinkel der Leitschaufeln) angegeben. In manchen Fällen wird zusätzlich noch der Einfluß des Unterwasserpegels auf die Kavitationsgrenzen berücksichtigt, d.h. der maximal zulässige Durchfluß ist durch eine Kennlinienschar als Funktion von Fallhöhe und Unterwasserpegel definiert. Der Regler begrenzt mit Hilfe dieser Kennlinien das Stellorgan und damit den Maschinendurchfluß, so daß die zulässigen Grenzwerte in keinem Fall überschritten werden können.

Eine weitere Verfeinerung ergibt sich durch die Berücksichtigung des Einflusses des Unterwasserpegels auf die Kavitationsgrenzen, d.h. der maximal zulässige Durchfluß ist durch eine Kennlinienschar als Funktion von Fallhöhe und Unterwasserpegel definiert. Der Regler begrenzt mit Hilfe dieser Kennlinien das Stellorgan und damit den Maschinendurchfluß, so daß die zulässigen Grenzwerte in keinem Fall überschritten werden können.

Das bisherige Verfahren des Ermittelns von Kavitationsgrenzwerten leidet unter einem zweifachen Mangel: Zum einen besteht keine exakte Analogie zwischen den Verhältnissen des Modellversuches einerseits und jenen der Großmaschine andererseits. So ist beispielsweise die Wasserführung im Modellversuch nicht immer homolog, so daß in der Großausführung teilweise andere Zuströmbedingungen vorgefunden werden als im Modell.

Zum anderen werden die durch Modellversuch und Vorausberechnung ermittelten Kavitationsgrenzwerte ein für alle Mal fest vorgegeben. Sie berücksichtigen somit nicht Veränderungen, die sich während der Lebensdauer der Maschine sowie der gesamten Anlage einstellen. Diese Veränderungen betreffen beispielsweise die geometrische Kontur der strömungsführenden Teile (z. B. der Leitschaufeln und der Laufschaufeln), oder Veränderungen, die sich aufgrund von Sanderosion, Rost, Reparaturen etc. im Laufe der Zeit ergeben, aber auch Veränderungen in den Zuströmbedingungen der Maschine (z. B. bauliche Veränderungen, Sandbänke im Flußbett, verändertes Niveau des Unterwasserpegels etc.).

Daraus resultieren für den Betreiber der Maschine verschiedene Einschränkungen und Probleme. Wegen den oben beschriebenen Unwägbarkeiten besteht einerseits das Risiko, daß falls die Grenzen zu großzügig eingestellt sind, unbemerkt fortschreitende Kavitationsschäden auftreten.

Um solche Schäden zu vermeiden, könnte man die Kavitationsgrenzwerte sehr restriktiv wählen. Dies bedeutet jedoch, daß der Betriebes- und Leistungsbereich der Maschine nicht optimal genutzt wird. Letzteres ist insbesondere dann der Fall, wenn der Maschinenhersteller, falls er für die angegebenen Grenzen ein bestimmtes Kavitationsverhalten garantieren muß, Sicherheitszuschläge einrechnet. Dies hat zur Folge, daß es an den Rändern des Betriebsbereichs Zonen gibt, in denen möglicherweise ein sicherer Betrieb oder zumindest ein Betrieb mit kalkulierbarem Risiko möglich wäre, vorausgesetzt, das tatsächliche Kavitatioinsverhalten der Maschine ist bekannt, d.h. es ist aus meßtechnisch erfassbaren Zustandsgrößen zuverlässig zu ermitteln. auf diese Weise läßt sich beispielsweise in Zeiten hoher Netzbelastung wertvolle Spitzenenergie erzeugen. Außerdem ist in Laufwasserkraftwerken bei Hochwasser eine Erhöhung der maximalen Dauerleistung möglich.

Weiterhin ergibt sich während des Betriebs durch die oben genannten längerfristigen Veränderungen an der Maschine unter Umständen eine Einschränkung des kavitationsfreien Betriebsbereichs, so daß die voreingestellten Grenzen, die für die Neumaschine gültig waren, für den tatsächlichen Maschinenzustand nicht mehr gültig sind. Wird die Maschine in der ursprünglichen Weise weiterbetrieben, kann dies zu immer weiter fortschreitenden Schädigungen führen.

Außerdem gibt es auch innerhalb des zulässigen Betriebsbereichs ungünstige Zonen, die zur Schonung der Maschine besser gemieden werden sollten. Dies war mit bisherigen gerätetechnischen Lösungen nicht möglich, da diese Zonen nicht detektiert werden konnten.

Ein besonders gravierendes Problem für den Betreiber stellt die Abhängigkeit der Erosionsgefahr von bisher nicht erfassbaren Randbedingungen dar. Hier ist insbesondere die Sedimentkonzentration zu nennen. Kavitation in Verbindung mit hoher Sandkonzentration führt in bestimmten Betriebsbereichen zu besonders starken Erosionserscheinungen. Dies hat schnell Veränderungen an der Schaufeloberfläche zur Folge, was zu einer weiteren Verstärkung des Effekts beiträgt. Dieser Mehrfacheffekt ist deshalb besonders gefährlich.

Zur meßtechnischen Erfassung von Kavitation sind verschiedene Verfahren bekannt. Eine Möglichkeit stellt zum Beispiel der Einsatz von speziell für sehr hohe Frequenzen (100 kHz bis 1 MHz) ausgelegte Körperschallsensoren dar, die am Turbinengehäuse angebracht werden. Für die Weiterverarbeitung hat sich die Bildung von zwei Kennwerten bewährt (W. Knapp, C. Schneider, R. Schilling "Ein Monitor-System zur akustischen Kavitationsüberwachung von Wasserturbinen", 8. Internationales Seminar "Wasserkraftanlagen", TU Wien, 1994). Kennwert 1 stellt den Summeneffektivwert des hochpaßgefilterten Zeitsignals dar. Dieser Kennwert erlaubt eine quantitative Aussage über die Kavitationsbelastung. Kennwert 2 ist ein Zählsignal. Das Auswertegerät zählt dabei die Spitzen in einem vordefinierten Zeitfenster, wobei jede Spitze die Wirkung einer platzenden Kavitationsblase darstellt. Dieser Kennwert ist gut zur Detektion des Kavitationsbeginns geeignet, weil er zunächst sehr steil ansteigt und bei voll ausgebildeter Kavitation in einen Sättigungsbereich übergeht.

Der Erfindung liegt die Aufgabe zugrunde, ein Verfahren zum Betreiben einer hydraulischen Maschine anzugeben, das es ermöglicht, während des Betriebes der Großmaschine die Kavitationsgrenzen möglichst genau zu erfassen, so daß einerseits in noch höherem Maße Kavitationssicherheit gegeben, und andererseits eine möglichst maximale Ausnutzung der Maschinenleistung gegeben ist.

Diese Aufgabe wird durch die Merkmale von Anspruch 1 gelöst.

Gemäß der Erfindung wird somit vorgeschlagen, den tatsächlichen Zustand der Maschine während des Betriebes zu erfassen, um den Betriebsbereich der Maschine automatisiert so zu erweitern, daß Maschinenschonung und Maximierung der Energieerzeugung sowie eine flexible Betriebsführung optimal aufeinander abgestimmt werden können. Falls von der Betriebsführung ein Arbeitspunkt innerhalb einer kritischen Zone vorgegeben wird (also innerhalb eines Bereichs, der in bisherigen Lösungen bewußt von vornherein ausgeschlossen war), wird die Stellgröße selbsttätig so geregelt, daß an der Maschine gerade noch keine gefährliche Erosion auftritt.

Die Aussagen über das Kavitationsverhalten der Maschine basieren im wesentlichen auf gemessenen Kaviationskennwerten. Mit Hilfe von Kenndaten, die aus dem Maschinenmodell abgeleitet werden, ist damit auch eine Bewertung (Kavitationsart, Schadenswirkung) möglich. Durch Einbeziehung von weiteren Zustandskennwerten lassen sich diese Aussagen weiter erhärten.

Ein weiteres Merkmal der Erfindung ist die Optimierung der Lufteinspeisung. Bei vielen Turbinen führen kavitierende Wirbel im Schaufelkanal und im Saugrohr zu einem rauhen Verhalten der Maschine mit unangenehmen Nebeneffekten (Rumpeln, Wellenschwingungen, Gebäudeschwingungen etc.). Zur Beruhigung der Wirbel wird in diesen Betriebsbereichen (z. B. über die Turbinenwelle oder andere Stellen) Luft eingespeist.

Der zur Erzeugung der Blasluft in bestimmten Fällen benötigte Kompressor hat einen relativ großen Energieverbrauch.

Erhebliche Energieeinsparungen sind deshalb möglich, falls die Blaslufteinspeisung nicht in einem fix vorgegebenen Betriebsbereich aktiviert wird, sondern genau dann, wenn es aufgrund des Kavitationsverhaltens der Maschine erforderlich ist.

Die beschriebenen Verfahren lassen sich für alle Typen von hydraulischen Strömungsmaschinen anwenden.

Als Betriebsdaten werden u.a. verarbeitet:

- Turbinendurchfluß (falls vorhanden)
- die ins Netz eingespeiste elektrische Wirk- und Blindleistung
- Leitschaufelöffnung
- Druck vor der Maschine und am Saugrohraustritt
- Oberwasserpegel
- Unterwasserpegel

Als Zustandskennwerte werden u.a. verarbeitet:

- Kavitationskennwert 1
- Kavitationskennwert 2
- Schwingungskennwerte
- Saugrohrdruck
- Sandkonzentration
- Luftdruck
- Wassertemperatur
- Generatortemperatur (z. B. Wicklungstemperatur)

Das Verfahren ist nicht auf die aufgezählten Meßdaten beschränkt. Das System kann zur Verfeinerung der Auswertung oder zur Erhärtung der Aussagen weitere Kennwerte heranziehen. Außerdem sind nicht alle genannten Signale zur Anwendung des Verfahrens erforderlich. Fehlende Kennwerte werden durch Standardannahmen (Erfahrungswerte) ersetzt oder mit Hilfe des Maschinenmodells berechnet.

Die Erfindung läßt sich auch auf alte Maschinen anwenden, für die keine Modelldaten vorliegen. Bezüglich alter Maschinen ist sie vielfach sogar die einzige Möglichkeit, um zuverlässige Aussagen über den zulässigen Betriebsbereich zu gewinnen.

Die Erfindung ist anhand der Figuren erläutert.

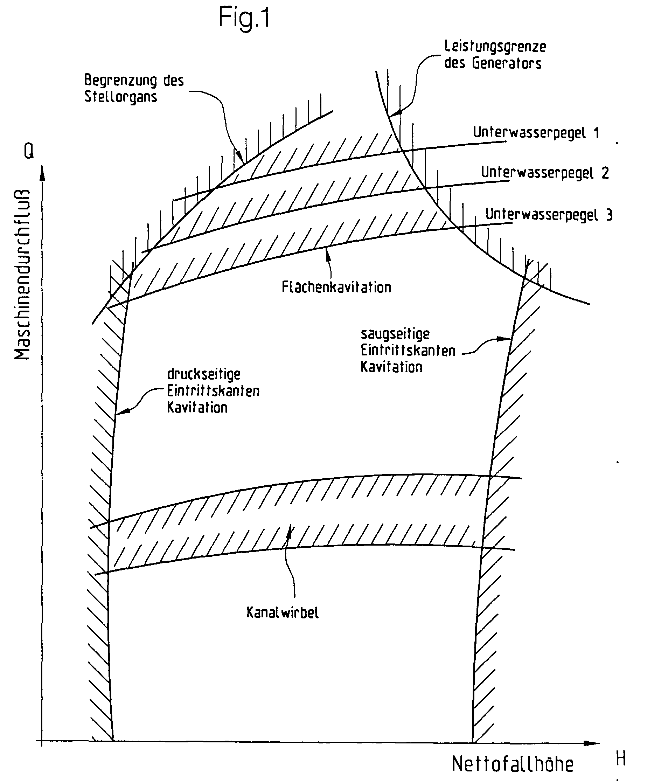

Fig. 1 zeigt in einem Q-H-Diagramm (Q..Maschinendurchfluß, H..Nettofallhöhe) qualitativ die wichtigsten Begrenzungen, die üblicherweise bei einer hydraulischen Maschine berücksichtigt werden müssen, wobei abhängig von Auslegung und Maschinentyp nicht immer alle Grenzen relevant sind. Neben den Kavitationsgrenzen sind die Begrenzung des Stellorgans (maximale Leitschaufelöffnung) sowie die Leistungsgrenze des Generators einzubeziehen. Außerdem ist zu beachten, daß sich die Kavitationsgrenzen als Funktion des Unterwasserpegels verschieben.

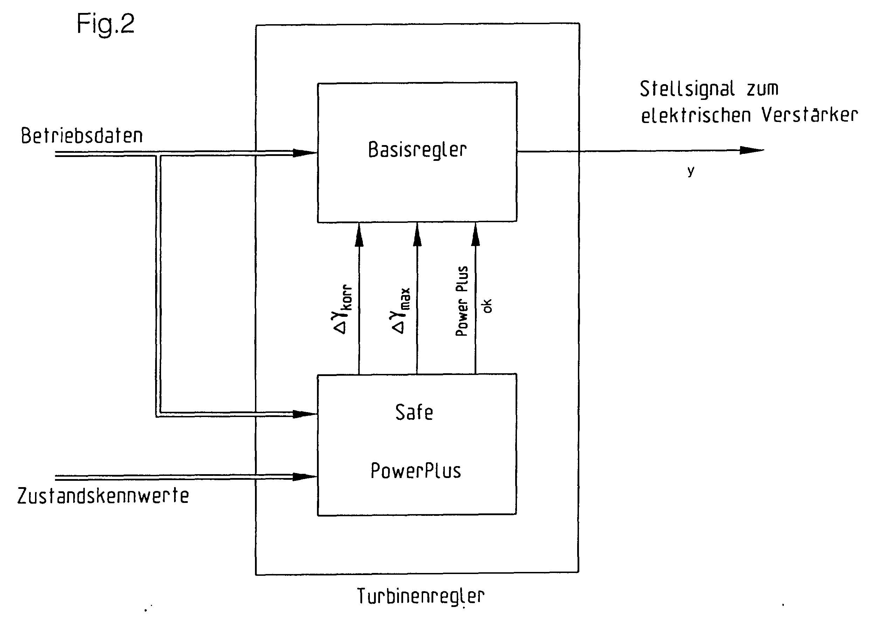

Fig. 2 verdeutlicht zunächst in einer großen Übersicht, wie das erfindungsgemäße Modul "PowerPlus" in einen digitalen Turbinenregler integriert wird. Der mit Basisregler bezeichnete Block stellt dabei den weitgehend unveränderten Regler in der bisherigen Form dar. Als Eingangsgrößen sind die Betriebsdaten, die vom Regler verarbeitet werden, sowie zusätzliche Zustandskennwerte vorgesehen. Die Realisierung von "PowerPlus" als integraler Bestandteil des digitalen Turbinenreglers erlaubt eine optimale Einbettung der erweiterten Funktionen als Ergänzung zu den traditionellen Reglerfunktionen. Bei Definition einer entsprechenden Schnittstelle ist jedoch auch eine Realisierung von "PowerPlus" als externes Gerät (SPS oder Digitalrechner) möglich.

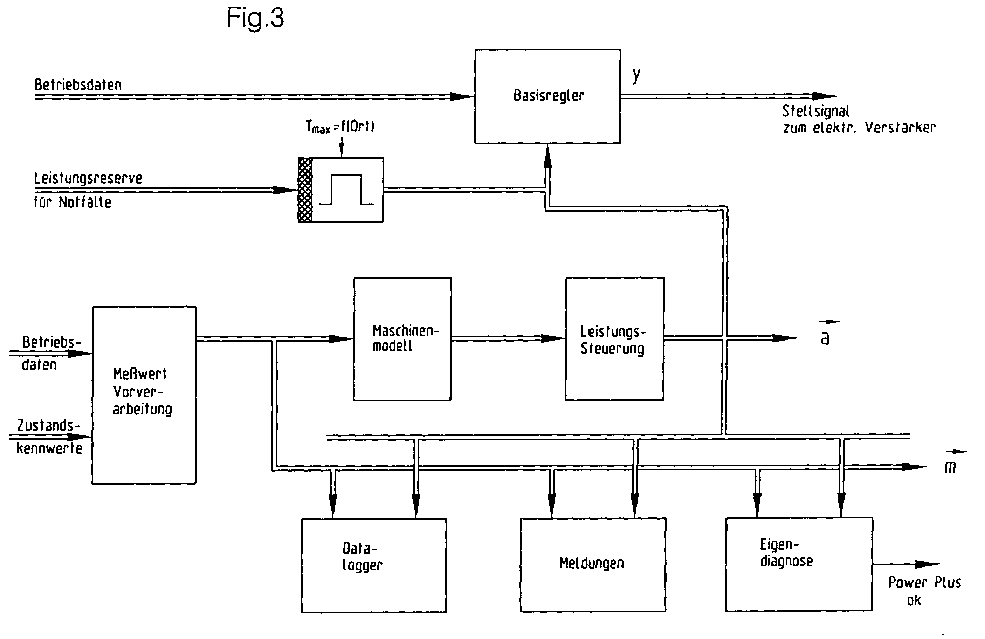

Die Struktur des Modus "PowerPlus" zeigt Fig. 3. Die Eingangsgrößen Betriebsdaten und Zustandskennwerte werden zunächst in der Meßwertvorverarbeitung aufbereitet. Das Ergebnis, der Meßwertvektor m, ist zur Verdeutlichung der Tatsache, daß es sich hierbei um ein Feld aus mehreren Größen handelt, als Doppelpfeil dargestellt. Aus dem Meßwertvektor werden mit Hilfe des Maschinenmodells die Basisdaten für die optimale Leistungssteuerung gebildet. Der Meßwertvektor m und der Auswertevektor a werden außer dem Regler den Modulen Datalogger, Meldungsgenerierung und Eigendiagnose zugeführt.

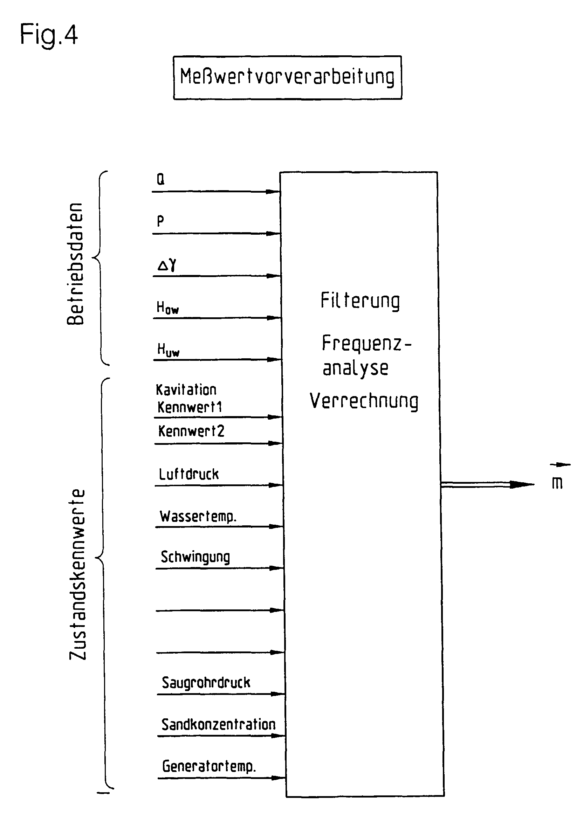

In Fig. 4 ist die Meßwertvorverarbeitung schematisch dargestellt. In diesem Submodul werden Betriebsdaten und Zustandskennwerte zur Weiterverarbeitung in den anderen Submodulen aufbereitet. Die Meßwerte können dabei direkt von Sensoren kommen oder es kann sich um bereits vorverarbeitete Daten handeln (z. B. Kavitationskennwerte, Schwingungskennwerte). Die Art der Auswertung richtet sich nach dem Kennwert. Das kann eine Filterung, eine Frequenzanalyse, aber auch eine arithmetische Verknüpfung von verschiedenen Kennwerten sein.

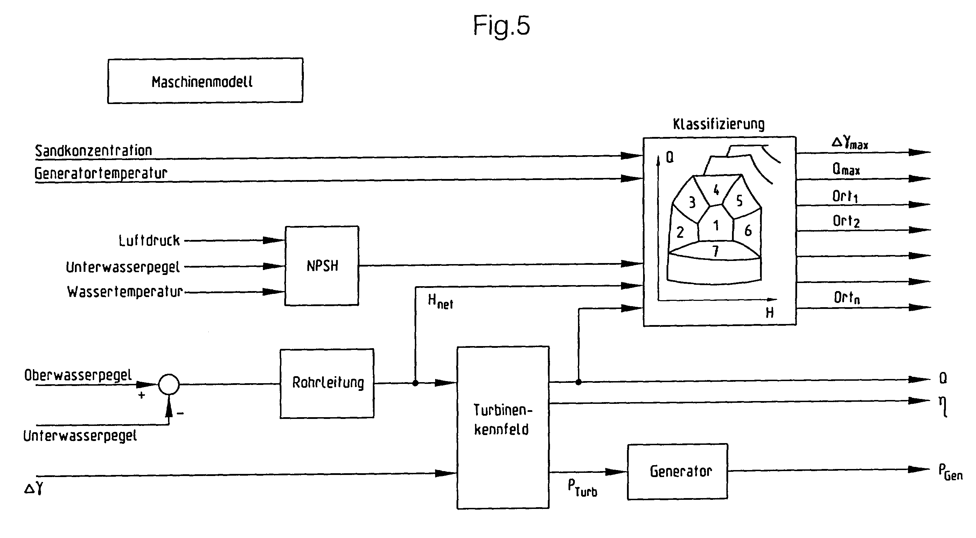

Fig. 5 zeigt die schematische Struktur des Maschinenmodells. Das Maschinenmodell dient zum einen dazu, den hydraulischen Betriebspunkt der Maschine, gekennzeichnet durch Durchfluß bzw. Leistung, Nettofallhöhe und NPSH-Wert zu ermitteln. Dies geschieht in den Blöcken Rohrleitung, Turbinenkennfeld, Generator und NPSH. Der NPSH-Wert (Net Positive Suction Head) wird berechnet aus Unterwasserpegel, Luftdruck und Wassertemperatur. Er beschreibt den Abstand des statischen Drucks vom Dampfdruck des Mediums und beeinflußt somit die Kavitationsgefahr und damit die Grenzen des zulässigen Betriebsbereichs.

Die dargestellte Konfiguration stellt lediglich ein Beispiel für eine Auswertung dar, die auf der Grundlage von typischerweise vorhandenen Meß- und Modelldaten durchgeführt wird. Im Einzelfall, bei geänderten Randbedingungen, kann das Maschinenmodell durchaus anders strukturiert sein. So ist beispielsweise als Eingangsgröße für das Turbinenkennfeld anstatt der Leitschaufelöffnung $\Delta\gamma$ die Generatorleistung $P_{gen}$ nutzbar. Ziel ist in jedem Fall die Ermittlung des hydraulischen Arbeitspunkts der Maschine, der eine Klassifizierung und Bewertung der gemessenen Kavitationskennwerte ermöglicht.

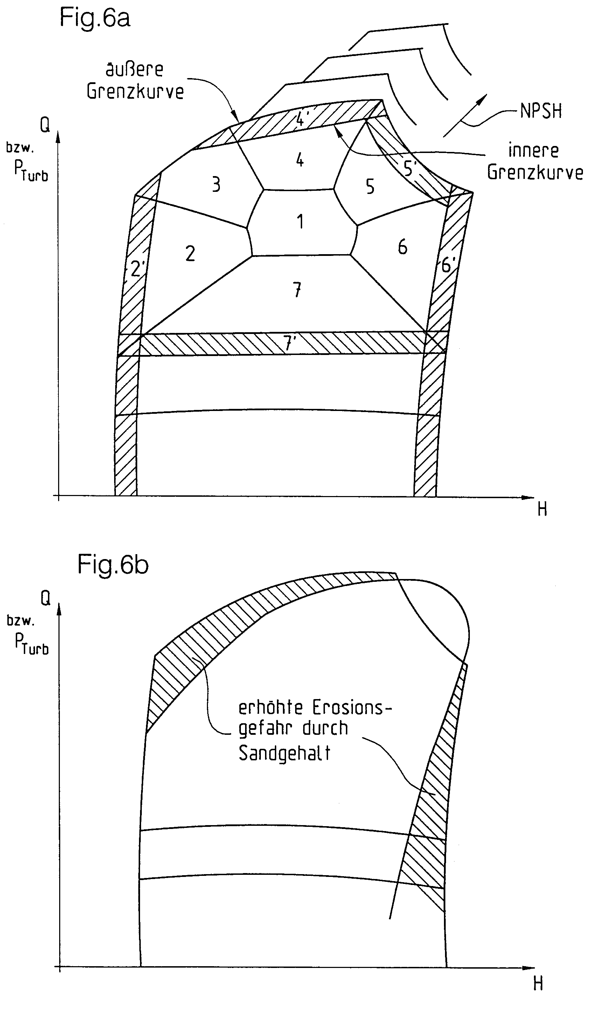

Gemäß Fig. 6a wird zunächst die Lage des Arbeitspuznkts im Q-H-Diagramm (Q..Durchfluß, H..Nettofallhöhe) bzw. P-H-Diagramm (P..Turbinenleistung) ermittelt. In diesem Diagramm sind zwei Grenzlinien eingezeichnet, wobei es sich genaugenommen um eine Grenzlinienschar handelt, da für jeden NPSH-Wert andere Grenzen gelten. Die äußere Grenze $Q_{max} = f(H, NPSH)$ bzw. $\Delta\gamma_{max} = f(H, NPSH)$ stellt die absolute Grenze des Betriebsbereichs dar, die aus Sicherheitsgründen auf keinen Fall überschritten werden darf. Die innere Kurve begrenzt den Bereich, der auch ohne zusätzliche Überwachungsmaßnahmen als ungefährlich betrachtet werden kann. Dies ist die Grenze, die in bisherigen Lösungen entweder erzwungen durch die Automatik oder durch die Bedienvorschriften des Maschinenherstellers einzuhalten war. Dazwischen befindet sich die oben angesprochene "Grauzone", in der die automatische Leistungsoptimierung wirksam wird.

Darüberhinaus wird bei der Klassifizierung eine Zuordnung zu Art bzw. Ort der Kavitation vorgenommen. Der Hydrauliker unterscheidet je nach Ort, wo die Kavitationsphänomene auftreten, u.a.

- druckseitige Eintrittskantenkavitation
- saugseitige Eintrittskantenkavitation
- Flächenkavitation
- kavitierende Kanalwirbel.

Außerdem wird die durch die thermische Überlastgrenze des Generators vorgegebene Leistungsgrenze sowie die Begrenzung des Stellorgans berücksichtigt. Die Leistungsgrenze des Generators kannn optional temperaturabhängig nachgeführt werden.

Der Zusammenhang zwischen Kavitationsphänomen und hydraulischem Arbeitspunkt ist dem Hydrauliker bekannt. Dieses Wissen wird im Klassifizierungsmodul durch die Definition von Zonen für Ort1, Ort2 bis Ortn hinterlegt. Abhängig von der Zugehörigkeit zur Zone Ort ⟨i⟩ werden in der Leistungssteuerung die Parameter der zeit- und zeitunabhängigen Regelkreisglieder umgeschaltet. Ort ⟨i⟩ legt dabei jeweils den Index des Parameters fest, der für die jeweilige Zone zu aktivieren ist.

Eine weitere Verfeinerung der Klassifizierung läßt sich durch die Berücksichtigung des Sandgehalts im Medium erreichen (Fig. 6b). Dies hängt mit der Tatsache zusammen, daß in bestimmten Betriebsbereichen die Erosionsgefahr mit zunehmendem Sandgehalt deutlich zunimmt. Die Leistungssteuerung berücksichtigt dies in der Weise, daß, falls der entsprechende Kennwert erhöhten Sandgehalt anzeigt, die Bewertung der Kavitationskennwerte so verändert wird, daß diese Zonen gemieden werden.

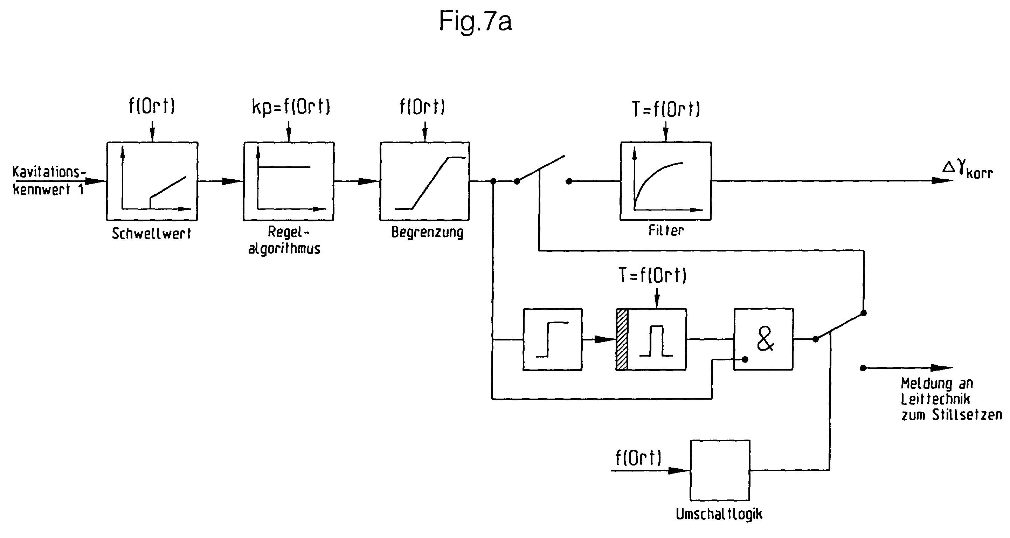

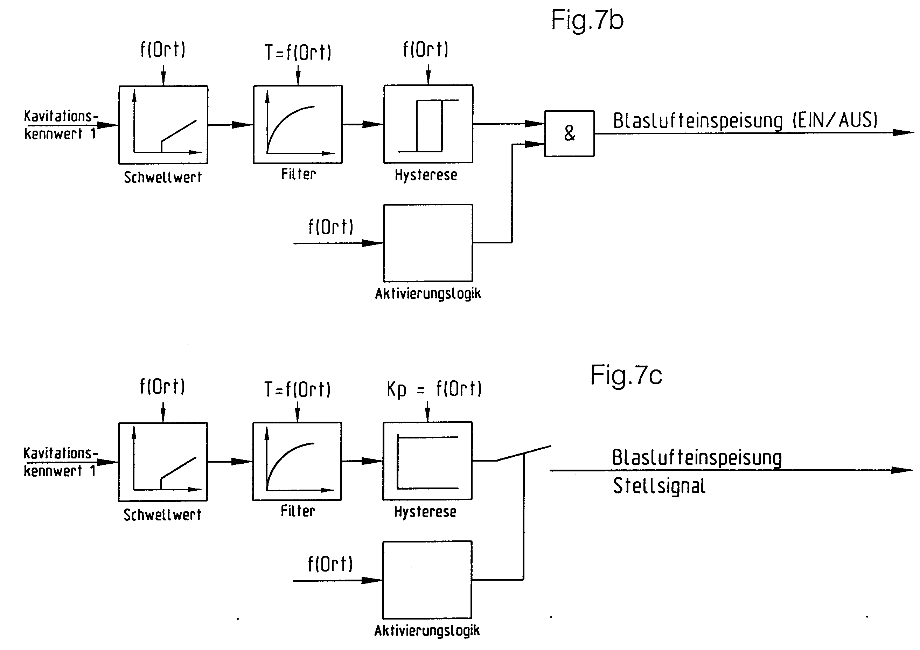

Fig. 7a ist eine schematische Darstellung der Funktionen der Leistungssteuerung.

Zum einen berechnet die Leistungssteuerung einen vorzeichenbehafteten Korrekturwert $\Delta\gamma_{korr}$, der zum Stellsignal hinzuaddiert wird. Die Anordnung stellt im wesentlichen einen Regler mit beliebigen dynamischen Eigenschaften dar, der den Arbeitspunkt der Maschine so einstellt, daß der Kavitationskennwert 1 unterhalb eines einstellbaren Schwellwerts liegt. Im einfachsten Fall ist der Regler wie in Bild 7 dargestellt durch ein einfaches Proportionalglied realisiert, dessen Verstärkung allerdings ständig an den Betriebspunkt angepaßt wird ($k_p$ = f(Ort) . Durch einen Begrenzer läßt sich aus Sicherheitsgründen die Eingriffsmöglichkeit von "PowerPlus" begrenzen. Der Filter verhindert abrupte Leistungsänderungen. Außerdem ist eine Logik vorgesehen, die den Eingriff von "PowerPlus" erst nach Ablauf einer Zeitverzögerung zuschaltet. Dies ist u.a. deshalb erforderlich, da bestimmte Zonen, insbesondere im Teillastbereich, bei Betriebsübergängen zwangsläufig durchfahren werden müssen.

Sämtliche Parameter der Regelkreisglieder sind als Funktion der Ergebnisse der Klassifizierung umschaltbar, d.h. es handelt sich jeweils um Parametersätze, die über Ort ( ) indiziert werden (in den Blockdiagrammen ist dies jeweils durch Angabe f(Ort) angedeutet). Durch Vorzeichenumkehr bei der Verstärkung läßt sich so insbesondere auch der Wirkungssinn des Korrekturwerts $\Delta\gamma_{korr}$ umkehren. Im Bereich der Flächenkavitationsgrenze ist beispielsweise bei Kavitation die Leitschaufelöffnung zu verringern (negatives Vorzeichen von $\Delta\gamma_{korr}$).Bei Kanalwirbelkavitation gibt es hingegen mehrere Möglichkeiten, den kritischen Bereich zu verlassen:

- Erhöhung des Turbinendurchflusses (positives $\Delta\gamma_{korr}$)
- Erniedrigung des Turbinendurchflusses (negatives $\Delta\gamma_{korr}$)
- Anweisung an die Leittechnik zum Stillsetzen der Maschine.

Figur 7b zeigt einen zweiten Zweig der Leistungssteuerung. Diese optimiert die Blaslufteinspeisung in Abhängigkeit vom Kavitationszustand. In einer ersten Variante fällt das System auf der Grundlage des Kavitationskennwerts 2 die Entscheidung, wann die Blaslufteinspeisung eingeschaltet wird, das heißt es wird ein binäres Signal zur Entscheidung Blasluft ein/aus abgeleitet. Überschreitet der Kavitationskennwert 2 einen einstellbaren Schwellwert, wird, falls das Signal Ort ( ) eine bestimmte Zone anzeigt (z. B. kavitierende Kanalwirbel), die Blaslufteinspeisung eingeschaltet. Der Filter dient zur Unterdrückung von kurzen Spitzen, während der Hystereseblock allzu häufiges Ein- und Ausschalten der Blaslufteinspeisung verhindert.

Die zweite Variante (Fig. 7b) ist für Anordnungen gedacht, bei denen die Blasluftmenge quantitativ gesteuert werden kann (z. B. über eine Drosselklappe).

Hierbei ist statt des Hystereseglieds ein Proportionalglied vorgesehen. In dieser Lösung wird die Luftmenge über das Kavitationsverhalten beeinflußt und zwar so, daß stärker werdende Kavitation zu einer Erhöhung der Luftmenge führt.

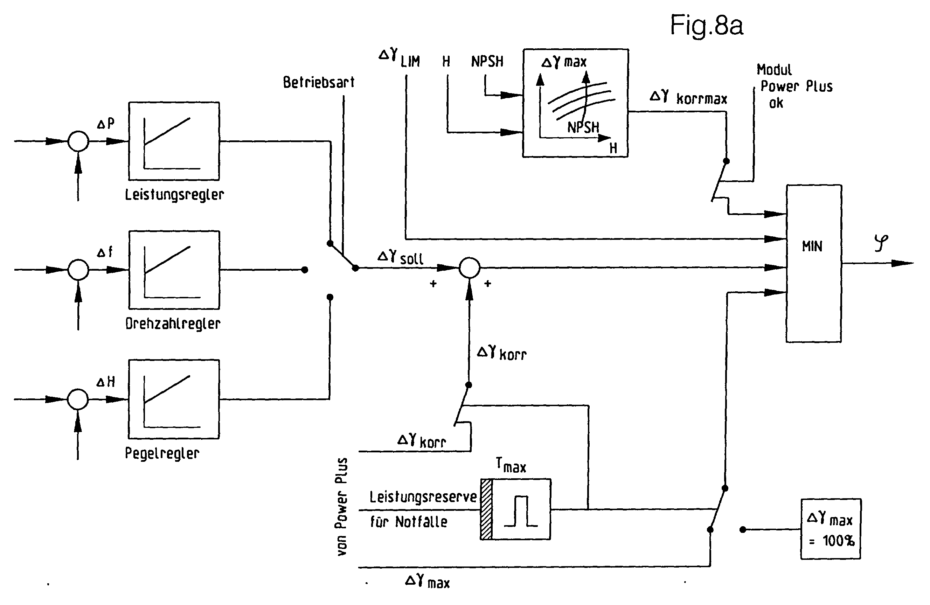

Fig. 8a zeigt zur Verdeutlichung der Einbindung der Ergebnisse von "PowerPlus" einen Ausschnitt aus der Blockstruktur des Turbinenreglers. Der zur momentan aktiven Betriebsart (Leistungsregelung, Wasserstandsregelung, Drehzahlregelung etc.) gehörige Regelalgorithmus liefert den Sollwert für das Stellsignal $\Delta\gamma_{soll}$. Dazu wird zunächst der von "PowerPlus" ermittelte vorzeichenbehaftete Korrekturwert $\Delta\gamma_{korr}$ hinzuaddiert. Im Block MIN erfolgt dann eine Minimalwertauswahl. Dadurch ergibt sich die Möglichkeit, das Stellsignal mit einer manuell einstellbaren Öffnungsbegrenzung zu begrenzen. Außerdem wird die von "PowerPlus" vorgegebene absolute Grenze

$$\Delta\gamma_{max} = f(H, NPSH)$$

über die Minimalwertauswahl erzwungen.

Eine weitere Begrenzung wird aktiviert, falls die Eigendiagnose von "PowerPlus" feststellt, daß das System nicht korrekt arbeitet. Durch Schließen des für diesen Fall vorgesehenen logischen Schalters wird eine fest vorgegebene Kurvenschar

$$\Delta\gamma_{korrmax} = f(H, NPSH)$$

wirksam, die den Betriebsbereich auf die oben erwähnte innere Grenze beschränkt. Damit ist sichergestellt, daß der Regler beim Ausfall von "PowerPlus", in genau der gleichen Weise arbeitet wie in bisherigen Lösungen.

In Ergänzung zu der hier beschriebenen Realisierung sind ohne Änderungen an der prinzipiellen Wirkungsweise des Verfahrens alternative Eingriffspunkte für das Korrektursignal möglich. So kann das Korrektursignal auch zur Regeldifferenz am Eingang der Regler für die einzelnen Betriebsarten aufsummiert werden. Außerdem besteht die Möglichkeit, daß die Minimalauswahl zwischen $\Delta\gamma_{korr}$ und $\Delta\gamma_{max}$ bereits im Modul "PowerPlus" erfolgt und das Minimum beider Größen auf den Block MIN des Reglers geschaltet wird.

Eine weitere Eingriffsmöglichkeit ist zur Aktivierung einer Leistungsreserve für einen begrenzten Zeitraum vorgesehen. Dabei wird bei Netzproblemen zur Stützung des Netzes unabhängig vom Kavitationszustand der Maschine für die Zeit $t_{max}$ bewußt auf eine Begrenzung des Betriebsbereichs verzichtet. In diesem Modus nimmt man für eine einstellbare Zeit, zugunsten der Erfüllung eines übergeordneten Ziels, Materialabtrag durch Kavitationserosion bewußt in Kauf.

Dazu wird in einer ersten Variante auf eine entsprechende Anforderung von der Betriebsführung der Ausgang zum elektrischen Verstärker maximal für die Zeit $t_{max}$ so angesteuert, daß das Stellglied die Leitschaufeln bis zur mechanischen Begrenzung öffnet. Sämtliche Begrenzungen werden dabei für diesen Zeitraum nicht beachtet.

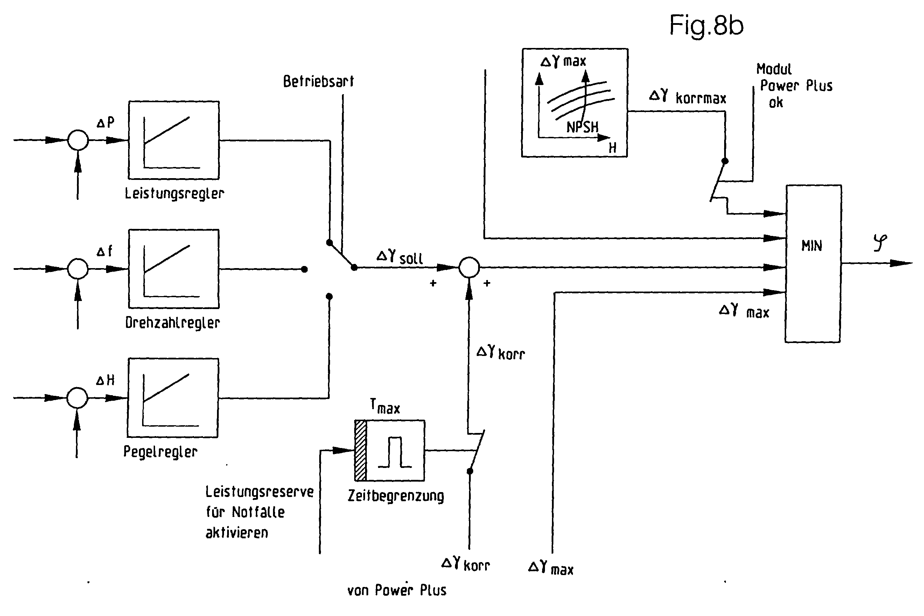

Alternativ dazu sieht eine zweite Variante (Fig. 8b) vor, lediglich das Korrektursignal $\Delta\gamma_{korr}$ zu unterdrücken. Die über $\Delta\gamma_{max}$ vorgegebene Begrenzung (äußere absolute Begrenzung des Betriebsbereichs) ist dagegen nach wie vor wirksam.

In der Übersichtdarstellung in Fig. 3 sind weitere Blöcke eingezeichnet, die die Daten weiterverarbeiten, die von den oben beschriebenen Funktionen erzeugt werden. Der Block Datalogger ermöglicht eine lückenlose Dokumentation des Maschinenzustands. Die hierbei erzeugte Datenbasis kann extern mit geeigneten Rechnerprogrammen dazu benutzt werden, um längerfristige Veränderungen an der Maschine bzw. Anlage zu erkennen und zu bewerten. Außerdem erlaubt die Korrelation zwischen den Meßdaten und den bei Revisionen beobachteten Materialabträgen eine Eichung der Kavitationskennwerte.

Der Block Meldungen dokumentiert sämtliche Ereignisse und die Eingriffe des Moduls und macht somit dem Anwender die Arbeitsweise von "PowerPlus" transparent.

Die Eigendiagnose nutzt redundante Informationen (z. B. Messung, Modellrechnung), um mit Hilfe von Plausibilitätsüberprüfungen die Funktionen von "PowerPlus" und der Meßtechnik zu überprüfen. Sobald Unstimmigkeiten detektiert werden, erfolgt neben einer Meldung sofort die automatische Deaktivierung des Modus.

Die zur Verwirklichung der Erfindung notwendigen Bauteile können integrale Bestandteile des Turbinenreglers sein.

Es versteht sich, daß die gemessenen Zustandskennwerte im allgemeinen noch nicht ausreichen, das erfindungsgemäße Verfahren anzuwenden. Vielmehr ist es notwendig, das Maschinenmodell zu klassifizieren, um die Art der Kavitation für die betreffende Maschine zu ermitteln. Somit ist festzustellen, ob es sich um Flächenkavitation, saug- und druckseitige Eintrittskavitation oder um kavitierende Wirbel handelt.

**Patentansprüche**

1. Verfahren zum Betreiben einer hydraulischen Maschine, insbesondere einer Wasserturbine, mit den folgenden Verfahrensschritten:

1.1 während des Betriebes werden Daten wenigstens der folgenden Zustandskennwerte ermittelt:

Leitschaufelöffnung
Oberwasserpegel
Unterwasserpegel
Kavitationskennwert 1 (relatives Maß für die Intensität der Kavitationsbelastung)

Kaviationskennwert 2 (Maß für den sprunghaften Anstieg von Kavitationserscheinungen)
Luftdruck;

1.2 aus der Lage des Betriebspunktes im QH-Diagramm für einen bestimmten NPSH-Wert wird die Art der Kavitation festgestellt;

1.3 der Betriebspunkt wird so verändert, daß die Grenze zu der entsprechenden Kavitationsart nicht überschritten wird (Fig. 6a).

2. Verfahren nach Anspruch 1, dadurch gekennzeichnet, daß während des Betriebes zur Vermeidung von Kavitation und/oder zur Optimierung der Laufruhe in die Maschine Luft eingespeist wird, und daß die Parameter der Lufteinspeisung unter Ausnutzung akuteller Betriebsdaten und/oder Zustandskennwerten im Bereich 7 gemäß Fig. 6a erfolgt.

3. Verfahren nach Anspruch 1 oder 2, dadurch gekennzeichnet, daß zusätzlich zu den in Anspruch 1 genannten Zustandsparametern wenigstens einer der folgenden Zustandsparameter ermittelt wird:

Turbinendurchfluß
die ins Netz eingespeiste elektrische Wirk- und Blindleistung
Druck vor der Maschine
Druck am Saugrohraustritt
Gesamtkonzentration
Wassertemperatur
Generatortemperatur (z. B. Wicklungstemperatur)

## Fig.1

Begrenzung des
Stellorgans

Leistungsgrenze
des Generators

Unterwasserpegel 1

Unterwasserpegel 2

Unterwasserpegel 3

Flachenkavitation

saugseitige
Eintrittskanten
Kavitation

druckseitige
Eintrittskanten
Kavitation

Kanalwirbel

Q

Maschinendurchfluß

Nettofallhöhe    H

7

Fig.2

Stellsignal zum elektrischen Verstärker

y

Basisregler

Safe PowerPlus

Power Plus ok

$\Delta y_{max}$

$\Delta y_{korr}$

Turbinenregler

Betriebsdaten

Zustandskennwerte

Fig.3

Fig.4

Meßwertvorverarbeitung

Betriebsdaten

Q

P

$\Delta Y$

$H_{ow}$

$H_{uw}$

Zustandskennwerte

Kavitation
Kennwert1

Kennwert2

Luftdruck

Wassertemp.

Schwingung

Saugrohrdruck

Sandkonzentration

Generatortemp.

Filterung

Frequenzanalyse

Verrechnung

$\vec{m}$

# Fig.5

Maschinenmodell

Sandkonzentration

Generatortemperatur

Luftdruck ——→
Unterwasserpegel ——→ NPSH
Wassertemperatur ——→

Oberwasserpegel ——→ (+)(−) —→ Rohrleitung

Unterwasserpegel

$H_{net}$

Klassifizierung

$\Delta Y_{max}$

$Q_{max}$

$Ort_1$

$Ort_2$

$Ort_n$

Turbinenkennfeld

$Q$

$\eta$

$\Delta Y$

$P_{Turb}$ →→ Generator →→ $P_{Gen}$

EP 0 878 624 A1

## Fig.6a

äußere
Grenzkurve

$Q$
bzw.
$P_{Turb}$

NPSH

innere
Grenzkurve

4'

4

3

5

5'

1

2

6

2'

6'

7

7'

$H$

## Fig.6b

$Q$
bzw.
$P_{Turb}$

erhöhte Erosionsgefahr durch
Sandgehalt

$H$

Fig.7a

Fig.7b

$f(Ort)$    $T=f(Ort)$    $f(Ort)$

Kavitationskennwert 1

Schwellwert    Filter    Hysterese

&

Blaslufteinspeisung (EIN/AUS)

$f(Ort)$

Aktivierungslogik

EP 0 878 624 A1

Fig.7c

$f(Ort)$    $T=f(Ort)$    $Kp = f(Ort)$

Kavitationskennwert 1

Schwellwert    Filter    Hysterese

Blaslufteinspeisung
Stellsignal

$f(Ort)$

Aktivierungslogik

# Fig.8a

EP 0 878 624 A1

Fig.8b

ΔP  Leistungsregler

Δf  Drehzahlregler

ΔH  Pegelregler

Betriebsart

ΔY soll

ΔY korr

Δγ max

NPSH

H

ΔY korrmax

Modul
Power Plus
ok

MIN

ΔY max

T max

Zeitbegrenzung

Leistungsreserve
für Notfälle
aktivieren

ΔY korr

von Power Plus

ΔY max

EP 0 878 624 A1

# EP 0 878 624 A1

**Europäisches Patentamt**

## EUROPÄISCHER RECHERCHENBERICHT

Nummer der Anmeldung

EP 98 10 8023

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y,D | W.KNAPP,C.SCHNEIDER,R.SCHILLING: "Ein monitor-system zur akustischen kavitationsüberwachung von wasserturbinen" INTERNATIONALES SEMINAR "WASSERKRAFTANLAGEN", Seiten 209-220, XP002073876 TU Wien 1994 * Seite 214, Absatz 2 - Seite 216, Absatz 3 * * Seite 218 * *Seiten 219-220,Schlussbetrachtung* | 1,3 | F03B11/04 F03B15/06 F03B15/16 |
| Y | | 2 | |
| Y | US 4 674 279 A (ALI MOHAMMAD A ET AL) 23. Juni 1987 * Zusammenfassung * * Spalte 2, Zeile 37 - Zeile 44 * * Spalte 3, Zeile 61 - Spalte 4, Zeile 15 * * Spalte 5, Zeile 1 - Zeile 10 * * Spalte 12, Zeile 34 - Spalte 13, Zeile 9 * | 1,3 | |
| | | | **RECHERCHIERTE SACHGEBIETE (Int.Cl.6)** |
| | | | F03B |
| Y | PATENT ABSTRACTS OF JAPAN vol. 010, no. 216 (M-502), 29. Juli 1986 & JP 61 053465 A (KANSAI ELECTRIC POWER CO INC:THE;OTHERS: 02), 17. März 1986 * Zusammenfassung * | 2 | |
| A | DE 42 20 255 C (VOITH GMBH J M) 23. Dezember 1993 | | |

Der vorliegende Recherchenbericht wurde für alle Patentansprüche erstellt

| Recherchenort | Abschlußdatum der Recherche | Prüfer |
|---|---|---|
| DEN HAAG | 6. August 1998 | Criado Jimenez, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes Dokument

EPO FORM 1503 03.82 (P04C03)